# EUROPEAN PATENT SPECIFICATION

(11) **EP 1 790 617 B1**
(45) Date of publication and mention of the grant of the patent: **13.02.2008**
(21) Application number: 05256174.3
(22) Date of filing: 03.10.2005
(51) Int. Cl.: C01G 49/00, C01D 1/02, C01B 13/14, H01M 4/58, H01M 4/48, C01B 25/45

(54) **Method for making a lithium mixed metal compound**
Verfahren zur Herstellung von Lithium-Metallmischverbindungen
Procédé de préparation d'un composé mixte en lithium et en metal

(43) Date of publication of application: 30.05.2007
(73) Proprietor: Aquire Energy Co. Ltd., Chung-Shan Taipei City (TW)
(72) Inventor: Yang, Chih-Wei, c/o Aquire Energy Co. Ltd., Chung-Shan Dist, Taipei City (TW)
(74) Representative: Smith, Norman Ian

(56) References cited:
- EP-A- 1 193 786
- US-A1- 2002 086 214
- US-A1- 2004 185 344

## Description

This invention relates to a method for making a lithium mixed metal compound, more particularly to a method for making a lithiummixedmetal compound by exposing a reactant mixture to an atmosphere in the presence of suspended carbon particles.

Lithium-containing transitional metal compounds, such as layered cobalt compounds, layered nickel compounds and spinel manganese compounds, have been developed for use in cathode materials. However, the cobalt compounds, such as lithium cobalt oxide (LiCoO₂), are hardly applied to highly capacitive battery cells due to their insufficient resources and poisonous properties. The nickel compounds, such as lithium nickel oxide (LiNiO₂), are difficult to synthesize and are unstable. In the past, manganese compounds, such as lithium manganese oxide (LiMn₂O₄), has been expected to be suitable for the high capacity battery cells because they are usually perceived to be economical and safe. However, they have been proved to have low capacity and are unstable and poor in cycle performance. In addition, when the cobalt compounds, nickel compounds and manganese compounds are applied to a battery cell, the initial capacity of the cell will diminish during the first cycle operation and will further decay obviously upon each subsequent cycle.

Another lithium-containing transitional metal compound, olivine lithium ferrous phosphate (LiFePO₄), has been considered for use in cathode materials. Being excellent in environmental protection, and safety concerns, the lithium ferrous phosphate has good electrochemical properties, high specific capacity, exceptional cycle performance, and high thermal stability. Lithium ferrous phosphate has a slight twisted hexagonal close-packed structure that includes a framework consisting of FeO₆ octahedrals, LiO₆ octahedrals, and PO₄ tetrahedrals. In the structure of lithium ferrous phosphate, one FeO₆ octahedral is co-sided with two LiO₆ octahedrals and one PO₄ tetrahedral. However, since the structure of such lithium ferrous phosphate lacks continuous co-sided FeO₆ octahedral network, no free electrons can be formed to conduct electricity. In addition, since the PO₄ tetrahedrals restrict lattice volume change, insertion and extraction of the lithium ions in lithium ferrous phosphate lattice is adversely affected, thereby significantly decreasing the diffusion rate of lithium ions. The conductivity and ion diffusion rate of lithium ferrous phosphate are decreased, accordingly.

Meanwhile, it has been generally agreed that the smaller the particle size of the lithium ferrous phosphate, the shorter will be the diffusion path of the lithium ions, and the easier will be the insertion and extraction of the lithium ions in lithium ferrous phosphate lattice, which is advantageous to enhance the ion diffusion rate. Besides, addition of conductive materials into the lithium ferrous phosphate is helpful in improving the conductivity of the lithium ferrous phosphate particles. Therefore, it has also been proposed heretofore to improve the conductivity of the lithium ferrous phosphate through mixing or synthesizing techniques.

Up to the present time, methods for synthesizing olivine lithium ferrous phosphate include solid state reaction, carbothermal reduction, and hydrothermal reaction. For example, U.S. PatentNo. 5,910,382 discloses a method for synthesizing olivine compound LiFePO₄ powders by mixing stoichiometric proportions of Li₂CO₃ or LiOH·H₂O, Fe{CH₂COOH}₂ and NH₄H₂PO₄·H₂O, and heating the mixtures in an inert atmosphere at an elevated temperature ranging from 650°C to 800°C. However, the particle size of the resultant LiFePO₄ powders is relatively large with an uneven distribution, and is not suitable for charge/discharge under a large electrical current. In addition, the ferrous source, i.e. Fe{CH₂COOH}₂, is expensive, which results in an increase in the manufacturing costs, accordingly.

Furthermore, U.S. Patent Nos. 6,528,033, 6,716,372, and 6,730,281 disclose methods for making lithium-containing materials by combining an organic material and a mixture containing a lithium compound, a ferric compound and a phosphate compound so that the mixture is mixed with excess quantities of carbon coming from the organic material and so that ferric ions in the mixture are reduced to ferrous ions. The mixture is subsequently heated in a non-oxidizing inert atmosphere so as to prepare LiFePO₄ through carbothermal reduction. However, the methods provided by these prior art patents involve addition of a great amount of organic materials to the mixture, and excess quantities of carbon in LiFePO₄ tend to reduce ferrous ions to iron metal and result in loss of specific capacity.

All the aforesaid methods for making LiFePO₄ involve solid-state reaction and require long reaction time and a high temperature treatment. The LiFePO₄ powders thus formed have a relatively large particle size, a poor ionic conductivity, and a relatively high deteriorating rate in electrochemical properties. In addition, the LiFePO₄ powders thus formed are required to be ball-milled due to their large particle size, and the quality of the LiFePO₄ powders will deteriorate due to impurity interference.

In addition, the method for making LiFePO₄ through hydrothermal reaction may use soluble ferrous compound, lithium compound, and phosphoric acid as starting materials, so as to control the particle size of LiFePO₄. However, hydrothermal reaction is relatively difficult to carry out since it requires to be conducted at a high temperature and a high pressure.

Therefore, there is still a need to provide an economical and simple method for making a lithium mixed metal compound having a relatively small particle size and good conductivity.

Therefore, the objective of the present invention is to provide a method for making a lithiummixedmetal compound that can alleviate the aforesaid drawbacks of the prior art.

According to one aspect of this invention, a method for making a lithium mixed metal compound includes: preparing a reactant mixture that comprises a metal compound and a lithium compound; and exposing the reactant mixture to an atmosphere in the presence of suspended carbon particles, and conducting a reduction to reduce oxidation state of at least one metal ion of the reactant mixture at a temperature sufficient to form a reaction product comprising lithium and the reduced metal ion.

According to another aspect of this invention, a method for making a lithium mixed metal compound includes: preparing a reactant mixture that comprises a metal compound, a lithium compound, and a phosphate group-containing compound; and exposing the reactant mixture to an atmosphere in the presence of suspended carbon particles, and conducting a reduction to reduce oxidation state of at least one metal ion of the reactant mixture at a temperature sufficient to form a single phase reaction product comprising lithium, the reduced metal ion, and the phosphate group.

Other features and advantages of the present invention will become apparent in the following detailed description of the preferred embodiments of this invention, with reference to the accompanying drawings, in which:
Fig. 1 shows the results of an X-ray diffraction pattern of the LiFePO₄ powders prepared according to Example 1 of the present invention;
Fig. 2 shows the results of an X-ray diffraction pattern of the LiFePO₄ powders prepared according to Example 2 of the present invention;
Fig. 3 shows the results of anX-raydiffractionpattern of the LiFePO₄ powders prepared according to Example 6 of the present invention;
Fig. 4 shows a SEM photograph to illustrate surface morphology of the LiFePO₄ powders prepared according to Example 6 of the present invention;
Fig. 5 shows a specific capacity/cycle number plot of a battery cell with cathode material made from the LiFePO₄ powders prepared according to Example 6 of the present invention;
Fig. 6 shows a voltage/capacity plot of a battery cell with cathode material made from the LiFePO₄ powders prepared according to Example 6 of the present invention; and
Fig. 7 is a schematic view to illustrate how reduction of a metal ion of a reactant mixture is conducted in a reduction chamber in the first preferred embodiment of this invention.

The first preferred embodiment of the method for making a lithium mixed metal compound includes: preparing a reactant mixture that includes a metal compound and a lithium compound; and exposing the reactant mixture to an atmosphere in the presence of suspended carbon particles, and conducting a reduction to reduce oxidation state of at least one metal ion of the reactant mixture at a temperature sufficient to form a reaction product comprising lithium and the reduced metal ion.

Preferably, the reactant mixture is prepared by dissolving in water the metal compound and the lithium compound, and is subsequently dried prior to the reduction operation of the reactant mixture. More preferably, the reactant mixture is dried by oven-drying or spray-drying. Most preferably, the reactant mixture is dried by oven-drying.

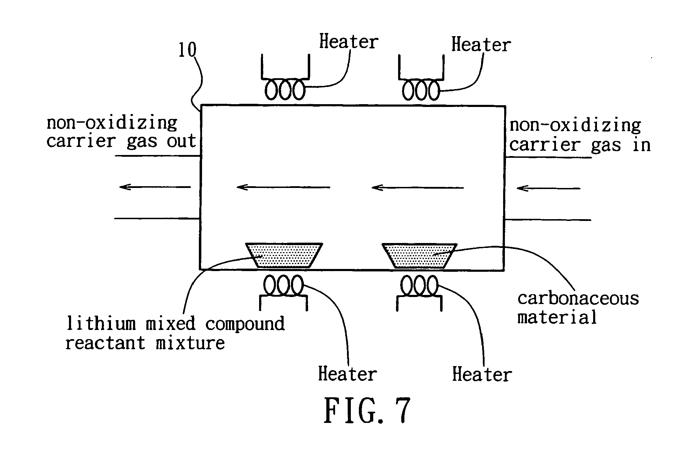

Referring to Fig. 7, the reduction operation of the reactant mixture is conducted in a reduction chamber 10. The atmosphere in the reduction chamber 10 is preferably a non-oxidizing atmosphere that consists of a non-oxidizing carrier gas.

The suspended carbon particles maybe formed by heating a carbonaceous material in the reduction chamber 10 to form carbon particles that are subsequently suspended in the reduction chamber 10 by the non-oxidizing carrier gas introduced into the reduction chamber 10 to flow over the heated carbonaceous material. Preferably, the non-oxidizing carrier gas is inert or non-oxidizing to the reactant mixture, and is selected from the group consisting of nitrogen, argon, carbon monoxide carbon dioxide, and mixtures thereof. More preferably, the non-oxidizing carrier gas is nitrogen.

The carbonaceous material may be selected from the group consisting of charcoal, graphite, carbon powders, coal,organic compounds,and mixturesthereof.Preferably, the carbonaceous material is charcoal.

Additionally, the heating operation of the carbonaceous material in the reduction chamber 10 is conducted at a temperature higher than 300°C. Preferably, the carbonaceous material is heated at a temperature ranging from 300°C to 1100°C. More preferably, the carbonaceous material is heated at 700°C.

In the reactant mixture, the metal compound may be a compound of a metal selected from the group consisting of Fe, Ti, V, Cr, Mn, Co, Ni, and mixtures thereof. Preferably, the compound of the metal is one of ferric nitrate (Fe(NO₃)₂) and ferric chloride (FeCl₃), and the metal ion to be reduced in the reactant mixture is ferric ion (Fe³⁺) or ferrous ion (Fe²⁺).

Alternatively, the metal compound may be a combination of transitional metal powders made from a metal selected from the group consisting of Fe, Ti, V, Cr, Mn, Co, Ni, and mixtures thereof, and an acid. Preferably, the transitional metal powders are iron powders, and the metal ion to be reduced in the reactant mixture is ferric ion (Fe³⁺) or ferrous ion (Fe²⁺).

In addition, the aforesaid acid may be chosen from one of an inorganic acid and an organic acid. The inorganic acid may be selected from the group consisting of nitric acid (HNO₃), sulfuric acid (H₂SO₄), hydrochloric acid (HCl), perchloric acid (HClO₄), hypochloric acid (HClO₃), hydrofluoric acid (HF), hydrobromic acid (HBrO₃), phosphoric acid (H₃PO₄), and mixtures thereof. The organic acid may be selected from the group consisting of formic acid (HCOOH), acetic acid (CH₃COOH), propionic acid (C₂H₅COOH) , citric acid (HOOCCH₂C (OH) (COOH) CH₂COOH·H₂O), tartaric acid ((CH(OH)COOH)₂), lactic acid (CH₃CHOHCOOH), and mixtures thereof. Preferably, the acid is nitric acid or hydrochloric acid.

As for the lithium compound, it is preferably selected from the group consisting of lithium hydroxide (LiOH), lithium fluoride (LiF), lithium chloride (LiCl), lithium oxide (Li₂O), lithium nitrate (LiNO₃), lithium acetate (CH₃COOLi), lithium phosphate (Li₃PO₄) lithium hydrogen phosphate (Li₂HPO₄), lithium dihydrogen phosphate (LiH₂PO₄), lithium ammonium phosphate (Li₂NH₄PO₄), lithium diammonium phosphate (Li (NH₄)₂PO₄), and mixtures thereof. More preferably, the lithium compound is lithium hydroxide.

Additionally, the reduction of the metal ion of the reactant mixture is conducted by heating the reactant mixture at a temperature ranging from 400°C to 1000°C for 1 to 30 hours. Preferably, the reduction of the metal ion is conducted at a temperature ranging from 450°C to 850 °C for 4 to 20 hours. More preferably, the reduction of the metal ion is conducted at about 700°C for 12 hours.

In addition, the first preferred embodiment of the method of this invention further includes adding a saccharide into the reaction mixture before the reduction operation of the reactant mixture. Preferably, the saccharide is selected from the group consisting of sucrose, glycan, and polysaccharides. More preferably, the saccharide is sucrose.

The second preferred embodiment of the method for making a lithium mixed metal compound includes: preparing a reactant mixture that comprises a metal compound, a lithium compound, and a phosphate group-containing compound; and exposing the reactant mixture to an atmosphere in the presence of suspended carbon particles, and conducting a reduction to reduce oxidation state of at least one metal ion of the reactant mixture at a temperature sufficient to form a single phase reaction product comprising lithium, the reduced metal ion, and the phosphate group.

In the second preferred embodiment, the preferred species of the lithium compound and the metal compound, process for forming the suspended carbon particles, and the operating conditions for the exposing and reduction operations of the reactant mixture are similar to those of the first preferred embodiment and have been explained hereinabove in detail.

As for the reactant mixture of the second preferred embodiment, it is preferably formed by preparing a solution comprising the metal ion dissociated from the metal compound, Li⁺ dissociated from the lithium compound, and (PO₄)³⁻ dissociated from the phosphate group-containing compound, followed by drying the solution. The single phase reaction product thus formed has a formula of LiₓM_{y}PO₄, in which 0.8≦x≦1.2, and 0.8≦y≦1.2. M represents a metal of the reduced metal ion, and is selected from the group consisting of Fe, Ti, V, Cr, Mn, Co, Ni, and combinations thereof.

Preferably, the phosphate group-containing compound is selected from the group consisting of ammonium hydrogen phosphate ((NH₄)₂HPO₄), ammonium dihydrogen phosphate ((NH₄)H₂PO₄), ammonium phosphate ((NH₄)₃PO₄), phosphorus pentoxide (P₂O₅), phosphoric acid (H₃PO₄), lithium phosphate (Li₃PO₄), lithium hydrogen phosphate (Li₂HPO₄), lithium dihydrogen phosphate (LiH₂PO₄), lithium ammonium phosphate (Li₂NH₄PO₄), lithium diammonium phosphate (Li(NH₄)₂PO₄), and mixtures thereof. More preferably, the phosphate group-containing compound is phosphoric acid (H₃PO₄).

### Examples

### Reactants and equipments:

1. Ferric nitrate (FeNO₃): commercially obtained from C-Solution Inc., Taiwan;
2. Ferric chloride (FeCl): commercially obtained from C-Solution Inc., Taiwan;
3. Iron powders: Hoganas Ltd. , Taiwan, mode no. NC-100.24;
4. Nitrogen gas (N₂): commercially obtained from C-Solution Inc., Taiwan;
5. Nitric acid (HNO₃): commercially obtained from C-Solution Inc., Taiwan;
6. Hydrochloric acid (HCl): commercially obtained from C-Solution Inc., Taiwan;
7. Phosphoric acid (H₃PO₃): commercially obtained from C-Solution Inc., Taiwan;
8. Lithium hydroxide (LiOH): Chung-Yuan Chemicals, Taiwan;
9. Sucrose: commercially obtained from Taiwan Sugar Corporation, Taiwan;
10. Carbon black: commercially obtained from Pacific Energytech Co., Ltd., Taiwan;
11. Polyvinylidene difluoride (PVDF): commercially obtained from Pacific Energytech Co., Ltd., Taiwan; and
12. Tubular furnace: commercially obtained from Ultra Fine Technologies, Inc., Taiwan.

### Example 1

0.2 mole of FeNO₃ was added to 200 ml of deionized water. After the FeNO₃ was completely dissolved in the deionized water, 100 ml of 2N LiOH solution was then added, so as to form a reactant mixture having a stoichiometric ratio 1 : 1 : 1 of Fe³⁺ : Li⁺ : PO₄³⁺. The reactant mixture was dried into a powder form, and was then placed in an aluminum oxide crucible. The crucible together with charcoal was placed in a tubular furnace which was heated at 700°C for 12 hours in the presence of an argon carrier gas charging into the furnace. Carbon particles formed from the charcoal were suspended in the argon carrier gas and were mixed with the reactant mixture. A single phase LiFePO₄ powder product, containing the carbon particles and LiFePO₄ powders, was obtained.

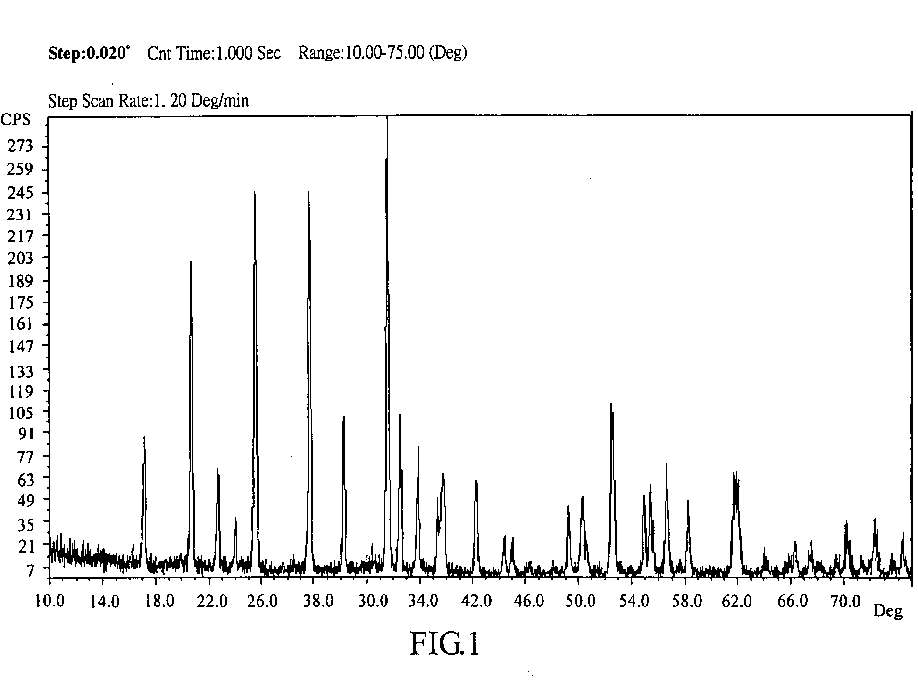

The LiFePO₄ powder product thus formed was analyzed by CuKα X-ray diffraction analyzer (manufactured by SGS Taiwan Ltd., Taiwan) and the results are shown in Fig. 1. The X-ray pattern shown in Fig. 1 demonstrates that the LiFePO₄ powders in the LiFePO₄ powder product have an olivine crystal structure.

### Example 2

In this example, LiFePO₄ powder product, containing the carbon particles and LiFePO₄ powders, was prepared in a manner similar to that of Example 1, except that 0.2 mole of FeNO₃ was replaced with 0.2 mole of FeCl₃.

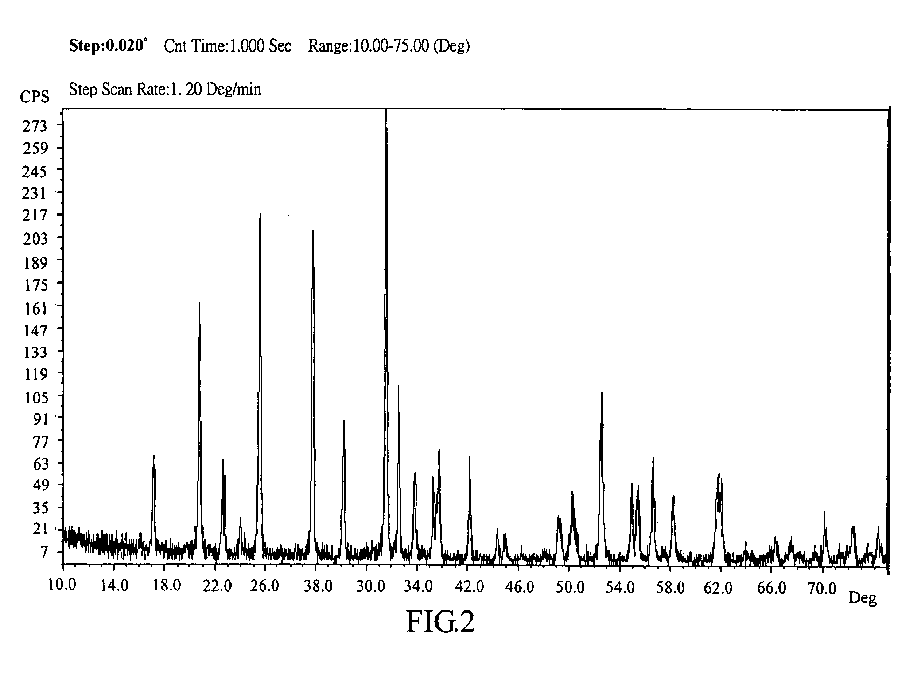

The LiFePO₄ powder product thus formed was analyzed by CuKα X-ray diffraction analyzer, and the results are shown in Fig. 2. The X-ray pattern shown in Fig. 2 demonstrates that the LiFePO₄ powders in the LiFePO₄ powder product have an olivine crystal structure.

### Example 3

In this example, LiFePO₄ powder product, containing the carbon particles and LiFePO₄ powders, was prepared in a manner similar to that of Example 1, except that 0.2 mole of FeNO₃ was replaced with a mixture of 0.2 mole of iron powders and 50 ml of concentrated HNO₃.

### Example 4

In this example, LiFePO₄ powder product, containing the carbon particles and LiFePO₄ powders, was prepared in a manner similar to that of Example 3, except that 50 ml of concentrated HNO₃ was replaced with 100 ml of concentrated HCl.

### Example 5

In this example, LiFePO₄ powder product, containing the carbon particles and LiFePO₄ powders, was prepared in a manner similar to that of Example 3, except that 50 ml of concentrated HNO₃ was replaced with 0.2 mole of H₃PO₄.

### Example 6

In this example, LiFePO₄ powder product, containing the carbon particles and LiFePO₄ powders, was prepared in a manner similar to that of Example 5, except that 3.2 g of sucrose was added to the reactant mixture before the reactant mixture was dried and heated.

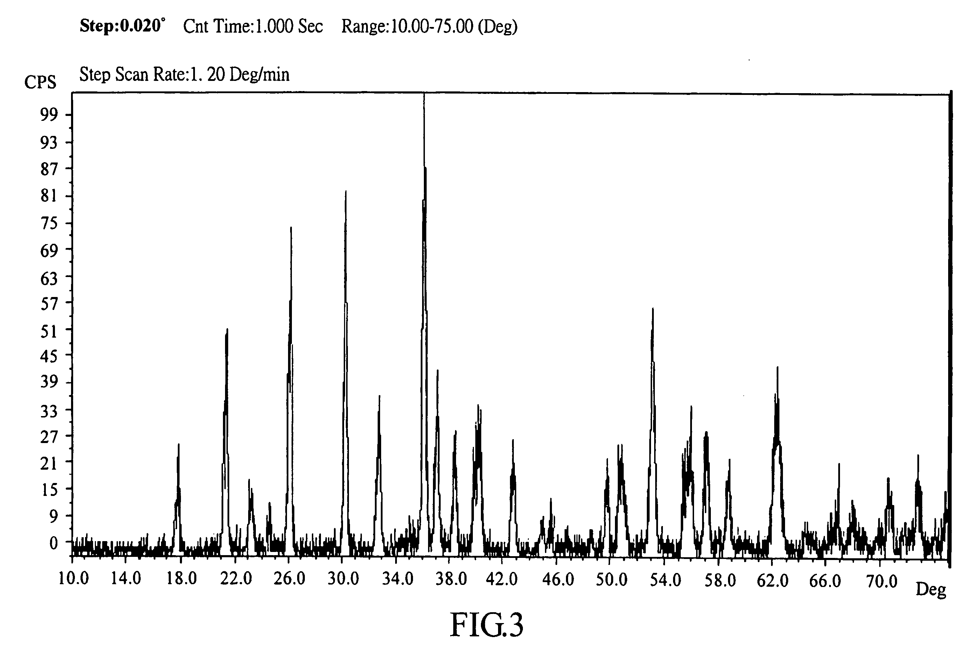

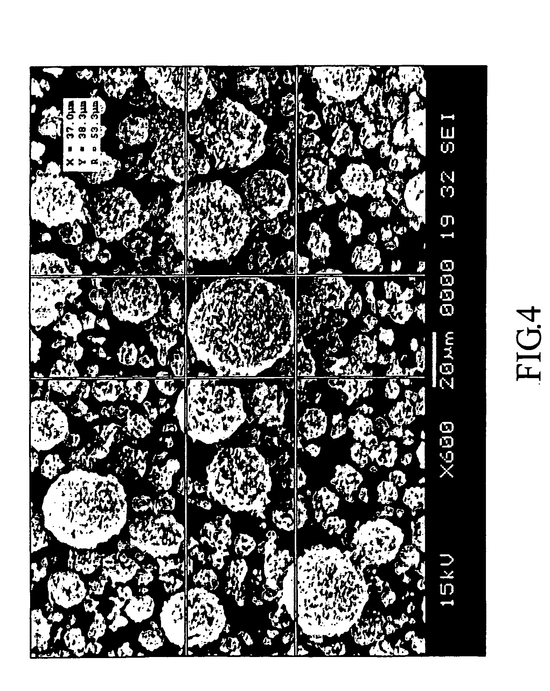

The LiFePO₄ powder product thus formed was analyzed by CuKα X-ray diffraction analyzer and observed by scanning electron microscope (SEM), and the results are shown in Figs. 3 and 4, respectively. The X-ray pattern shown in Fig. 3 and the photograph shown in Fig. 4 demonstrate that the LiFePO₄ powders in the LiFePO₄ powder product have an olivine crystal structure and a particle size of about 100 nm.

### Example 7

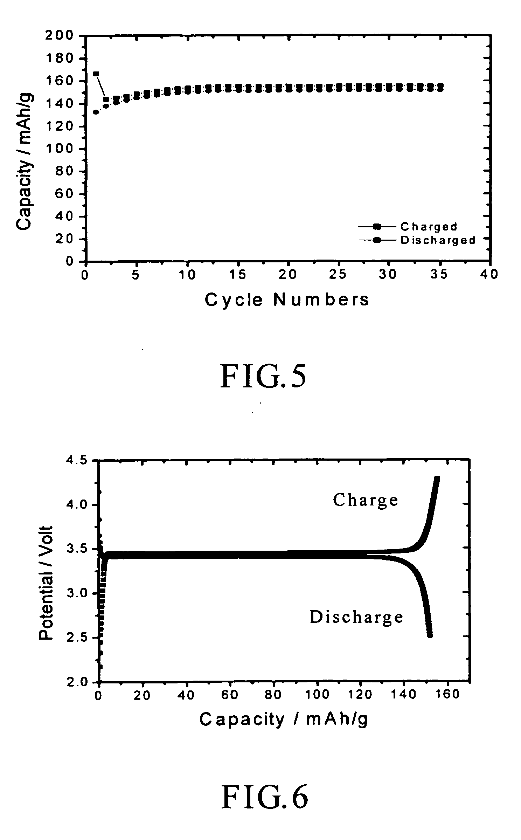

A mixture containing the LiFePO₄ powder product obtained from Example 6, carbon black, and polyvinylidene difluoride (PVDF) in a ratio of 83:10:7 was prepared and mixed thoroughly. The mixture was subsequently coated on a piece of aluminum foil and was dried to form a cathode. The cathode was applied to a battery cell, and the battery cell was subjected to a charge/discharge test in a charge/discharge tester. The battery cell was charged and discharged at an approximate C/5 (5 hour) rate at a voltage ranging from 2.5 V and 4.5 V. The results of specific capacity variation are shown in Fig. 5. The results of voltage variation at the charge and discharge plateau in the 15^{th} cycle at room temperature are shown in Fig. 6. According to the results shown in Fig. 5, the initial specific capacity of the battery cell at room temperature is about 148 mAh/g, while after thirty cycles of charge/discharge operations, the specific capacity of the battery cell at room temperature reaches about 151 mAh/g. These results demonstrate that the battery cell has a good cycle stability. According to the results shown in Fig. 6, the charge/discharge performance and stability are improved.

In view of the foregoing, high temperature and pressure operations utilized in the conventional methods are not required in the method of this invention. Besides, compared with the LiFePO₄ powder product obtained from the conventional methods, the LiFePO₄ powders in the LiFePO₄ powder product obtained according to the method of the present invention have a smaller particle size and more uniform particle size distribution, and the ball-milling treatment required in the conventional method can be omitted. Therefore, the method of this invention is more economical than the conventional methods in terms of production cost. Additionally, the LiFePO₄ powder product obtained according to the method of the present invention is a mixture of the LiFePO₄ powders and carbon particles, and the presence of the carbon particles can enhance the electrical conductivity of the LiFePO₄ powders.

## Claims

1. A method for making a lithium mixed metal compound, **characterized by**
preparing a reactant mixture that comprises a metal compound and a lithium compound; and
exposing the reactant mixture to an atmosphere in the presence of suspended carbon particles, and conducting a reduction to reduce oxidation state of at least one metal ion of the reactant mixture at a temperature sufficient to form a reaction product comprising lithium and the reduced metal ion.

2. The method of claim 1, **characterized by**
preparing the reactant mixture so that it also comprises a phosphate group-containing compound;
and the reaction product as a single phase reaction product comprising lithium, the reduced metal ion, and the phosphate group.

3. The method of claim 2, **characterized in that** the reactant mixture is formed by preparing a solution that comprises the metal ion dissociated from the metal compound, Li⁺ dissociated from the lithium compound, and (PO₄)³⁻ dissociated from the phosphate group-containing compound, followed by drying the solution,
the single phase reaction product having a formula of LiₓM_{y}PO₄, in which 0.8 ≤x≤1.2, 0.8≤y≤1.2, and M represents the reduced metal ion and is selected from the group comprising Fe, Ti, V, Cr, Mn, Co, Ni, and combinations thereof.

4. The method of claims 1, 2 or 3, **characterized in that** the reduction operation of the reactant mixture is conducted in a reduction chamber (10), and wherein the suspended carbon particles are formed by heating a carbonaceous material in a reduction chamber (10) to form carbon particles which are subsequently suspended in the reduction chamber (10) by a non-oxidizing carrier gas introduced into the reduction chamber (10) to flow over the heated carbonaceous material.

5. The method according to any one of claims 1 to 4, **characterized in that** the non-oxidizing carrier gas is selected from the group comprising nitrogen, argon, carbon monoxide, carbon dioxide, and mixtures thereof.

6. The method according to any one of claims 1 to 5, **characterized in that** the carbonaceous material is selected from the group comprising charcoal, graphite, carbon powders, coal, organic compounds, and mixtures thereof.

7. The method according to any one of claims 1 to 6, **characterized in that** the heating operation of the carbonaceous material is conducted at a temperature ranging from 300°C to 1100°C.

8. The method according to any one of claims 1 to 7, **characterized in that** the reduction of the metal ion of the reactant mixture is conducted at a temperature ranging from 400°C to 1000°C for 1 to 30 hours.

9. The method according to any one of claims 1 to 8, **characterized in that** the metal compound is formed from a mixture of transition metal powder and an acid.

10. The method according to claim 9, **characterized in that** the acid is an inorganic acid selected from the group comprising nitric acid, sulfuric acid, hydrochloric acid, perchloric acid, hypochloric acid, hydrofluoric acid, hydrobromic acid, phosphoric acid, and mixtures thereof.

11. The method according to claim 9, **characterized in that** the acid is an organic acid selected from the group comprising of formic acid, acetic acid, propionic acid, citric acid, tartaric acid, lactic acid, and mixtures thereof.

12. The method according to claims 9 to 11, **characterized in that** the transition metal powders are selected from the group comprising Fe, Ti, V, Cr, Mn, Co, Ni, and mixtures thereof.

13. The method according to claims 9 to 12, **characterized in that** the transition metal powders are iron powders.

14. The method according to any one of claims 1 to 13, **characterized in that** the metal compound is selected form the group comprising ferric nitrate and ferric chloride.

15. The method according to any one of claims 1 to 14, **characterized in that** the lithium compound is selected from the group comprising lithium hydroxide, lithium fluoride, lithium chloride, lithium oxide, lithium nitrate, lithium acetate, lithium phosphate, lithium hydrogen phosphate, lithium dihydrogen phosphate, lithium ammonium phosphate, lithium diammonium phosphate, and mixtures thereof.

16. The method according to claim 2 or any one of claims 3 to 15 when dependent on claim 2, **characterized in that** the phosphate group-containing compound is selected from the group comprising ammonium hydrogen phosphate, ammonium dihydrogen phosphate, ammonium phosphate, phosphorus pentoxide, phosphoric acid, lithium phosphate, lithium hydrogen phosphate, lithium dihydrogen phosphate, lithium ammonium phosphate, lithium diammonium phosphate, and mixtures thereof.

17. The method according to any one of claims 1 to 16 , further **characterized by** the addition of a saccharide into the reactant mixture before the reduction operation of the reactant mixture.

18. The method according to claim 17, **characterized in that** the saccharide is selected from the group comprising sucrose, glycan, and polysaccharides.

## Patentansprüche

1. Verfahren zur Herstellung einer Lithiummischmetallverbindung, **dadurch gekennzeichnet, daß** man
eine Reaktionsmischung zubereitet, die eine Metallverbindung und eine Lithiumverbindung enthält, und
die Reaktionsmischung einer Atmosphäre in Gegenwart von suspendierten Kohlenstoffpartikeln aussetzt und eine Reduktion zur Reduzierung der Oxidationsstufe wenigstens eines Metallions der Reaktionsmischung bei einer Temperatur durchführt, die ausreicht, um ein Reaktionsprodukt zu bilden, das Lithium und das reduzierte Metallion enthält.

2. Verfahren nach Anspruch 1, **dadurch gekennzeichnet, daß** man die Reaktionsmischung so zubereitet, daß sie außerdem eine phosphathaltige Verbindung enthält, und das Reaktionsprodukt als Einphasenreaktionsprodukt enthaltend Lithium, das reduzierte Metallion und die Phosphatgruppe.

3. Verfahren nach Anspruch 2, **dadurch gekennzeichnet, daß** die Reaktionsmischung gebildet wird, indem man eine Lösung zubereitet, die das Metallion dissoziiert von der Metallverbindung, Li⁺ dissoziiert von der Lithiumverbindung und (PO₄)³⁻ dissoziiert von der phosphatgruppenhaltigen Verbindung enthält und anschließend die Lösung trocknet, wobei das Einphasenreaktionsprodukt die Formel LiₓM_{y}PO₄ aufweist, wobei 0,8 < x ≤ 1,2, 0,8 ≤ y ≤ 1,2 und M für das reduzierte Metallion steht und ausgewählt ist aus der Gruppe bestehend aus Fe, Ti, V, Cr, Mn, Co, Ni und Kombinationen davon.

4. Verfahren nach Anspruch 1, 2 oder 3, **dadurch gekennzeichnet, daß** die Reduktion der Reaktionsmischung in einer Reaktionskammer (10) durchgeführt wird, wobei die suspendierten Kohlenstoffartikel gebildet werden, indem man ein kohlenstoffhaltiges Material in einer Reduktionskammer (10) zur Bildung von Kohlenstoffpartikeln erhitzt, die anschließend in der Reduktionskammer (10) suspendiert werden, indem man ein nichtoxidierendes Trägergas so in die Reduktionskammer (10) einleitet, daß es über das erhitzte kohlenstoffhaltige Material strömt.

5. Verfahren nach einem der Ansprüche 1 bis 4, **dadurch gekennzeichnet, daß** das nichtoxidierende Trägergas ausgewählt ist aus der Gruppe bestehend aus Stickstoff, Argon, Kohlenmonoxid, Kohlendioxid und Mischungen davon.

6. Verfahren nach einem der Ansprüche 1 bis 5, **dadurch gekennzeichnet, daß** das kohlenstoffhaltige Material ausgewählt ist aus der Gruppe bestehend aus Aktivkohle, Graphit, Kohlenstoffpulvern, Kohle, organischen Verbindungen und Mischungen davon.

7. Verfahren nach einem der Ansprüche 1 bis 6, **dadurch gekennzeichnet, daß** das Erhitzen des kohlenstoffhaltigen Materials bei einer Temperatur im Bereich von 300ºC bis 1100ºC erfolgt.

8. Verfahren nach einem der Ansprüche 1 bis 7, **dadurch gekennzeichnet, daß** die Reduktion des Metallions der Reaktionsmischung bei einer Temperatur im Bereich von 400ºC bis 1000ºC über 1 bis 30 Stunden erfolgt.

9. Verfahren nach einem der Ansprüche 1 bis 8, **dadurch gekennzeichnet, daß** die Metallverbindung aus einer Mischung aus einem Übergangsmetallpulver und einer Säure gebildet wird.

10. Verfahren nach Anspruch 9, **dadurch gekennzeichnet, daß** es sich bei der Säure um eine anorganische Säure ausgewählt aus der Gruppe bestehend aus Salpetersäure, Schwefelsäure, Chlorwasserstoffsäure, Perchlorsäure, hypochlorige Säure, Fluorwasserstoffsäure, Bromwasserstoffsäure, Phosphorsäure und Mischungen davon handelt.

11. Verfahren nach Anspruch 9, **dadurch gekennzeichnet, daß** es sich bei der Säure um eine organische Säure ausgewählt aus der Gruppe bestehend aus Ameisensäure, Essigsäure, Propionsäure, Citronensäure, Weinsäure, Milchsäure und Mischungen davon handelt.

12. Verfahren nach einem der Ansprüche 9 bis 11, **dadurch gekennzeichnet, daß** die Übergangsmetallpulver ausgewählt sind aus der Gruppe bestehend aus Fe, Ti, V, Cr, Mn, Co, Ni und Mischungen davon.

13. Verfahren nach einem der Ansprüche 9 bis 12, **dadurch gekennzeichnet, daß** es sich bei den Übergangsmetallpulvern um Eisenpulver handelt.

14. Verfahren nach einem der Ansprüche 1 bis 13, **dadurch gekennzeichnet, daß** die Metallverbindung ausgewählt ist aus der Gruppe bestehend aus Eisen(III)-nitrat und Eisen(III)-chlorid.

15. Verfahren nach einem der Ansprüche 1 bis 14, **dadurch gekennzeichnet, daß** die Lithiumverbindung ausgewählt ist aus der Gruppe bestehend aus Lithiumhydroxid, Lithiumfluorid, Lithiumchlorid, Lithiumoxid, Lithiumnitrat, Lithiumacetat, Lithiumphosphat, Lithiumhydrogenphosphat, Lithiumdihydrogenphosphat, Lithiumammoniumphosphat, Lithiumdiammoniumphosphat und Mischungen davon.

16. Verfahren nach Anspruch 2 oder einem der Ansprüche 3 bis 15, wenn diese von Anspruch 2 abhängen, **dadurch gekennzeichnet, daß** die phosphatgruppenhaltige Verbindung ausgewählt ist aus der Gruppe bestehend aus Ammoniumhydrogenphosphat, Ammoniumdihydrogenphosphat, Ammoniumphosphat, Phosphorpentoxid, Phosphorsäure, Lithiumphosphat, Lithiumhydrogenphosphat, Lithiumdihydrogenphosphat, Lithiumammoniumphosphat, Lithiumdiammoniumphosphat und Mischungen davon.

17. Verfahren nach einem der Ansprüche 1 bis 16 weiterhin **dadurch gekennzeichnet, daß** der Reaktionsmischung vor der Reduktion der Reaktionsmischung ein Saccharid zugesetzt wird.

18. Verfahren nach Anspruch 17, **dadurch gekennzeichnet, daß** das Saccharid ausgewählt ist aus der Gruppe bestehend aus Saccharose, Glykan und Polysacchariden.

## Revendications

1. Procédé de fabrication d'un composé métallique mixte de lithium, **caractérisé par** la préparation d'un mélange de réactifs qui comprend un composé métallique et un composé de lithium ; et
l'exposition du mélange de réactifs à une atmosphère en présence de particules de carbone en suspension, et la conduite d'une réduction pour réduire l'état d'oxydation d'au moins un ion métallique du mélange de réactifs à une température suffisante pour former un produit de réaction comprenant du lithium et l'ion métallique réduit.

2. Procédé de la revendication 1, **caractérisé par**
la préparation du mélange de réactifs de sorte qu'il comprend également un composé contenant un groupe phosphate ;
et le produit de réaction sous la forme d'un produit de réaction monophase comprenant du lithium, l'ion de métal réduit, et le groupe phosphate.

3. Procédé de la revendication 2, **caractérisé en ce que** le mélange de réactifs est formé en préparant une solution qui comprend l'ion métallique dissocié du composé métallique, Li⁺ dissocié du composé de lithium, et (PO₄)³⁻ dissocié du composé contenant un groupe phosphate, suivi par le séchage de la solution,
le produit de réaction monophase ayant une formule de LiₓM_{y}PO₄, dans lequel 0,8 ≤ x ≤ 1,2, 0,8 ≤ y ≤ 1,2, et M représente l'ion métallique réduit et est choisi dans le groupe constitué de Fe, Ti, V, Cr, Mn, Co, Ni, et des combinaisons de ceux-ci.

4. Procédé des revendications 1, 2 ou 3, **caractérisé en ce que** l'opération de réduction du mélange de réactifs est conduite dans une chambre de réduction (10), et dans lequel les particules de carbone en suspension sont formées par chauffage d'un matériau carboné dans une chambre de réduction (10) pour former des particules de carbone qui sont ensuite mises en suspension dans la chambre de réduction (10) par un gaz vecteur non oxydant dans la chambre de réduction (10) de manière à s'écouler sur le matériau carboné chauffé.

5. Procédé selon l'une quelconque des revendications 1 à 4, **caractérisé en ce que** le gaz vecteur non oxydant est choisi dans le groupe constitué de l'azote, l'argon, le monoxyde de carbone, le dioxyde de carbone, et des mélanges de ceux-ci.

6. Procédé selon l'une quelconque des revendications 1 à 5, **caractérisé en ce que** le matériau carboné est choisi dans le groupe constitué du charbon de bois, du graphite, des poudres de carbone, du charbon, de composés organiques, et des mélanges de ceux-ci.

7. Procédé selon l'une quelconque des revendications 1 à 6, **caractérisé en ce que** l'opération de chauffage du matériau carboné est conduite à une température dans la plage de 300°C à 1100°C.

8. Procédé selon l'une quelconque des revendications 1 à 7, **caractérisé en ce que** la réduction de l'ion métallique du mélange de réactifs est conduite à une température dans la plage de 400°C à 1000°C pendant 1 à 30 heures.

9. Procédé selon l'une quelconque des revendications 1 à 8, **caractérisé en ce que** le composé métallique est formé à partir d'un mélange de poudre de métal de transition et d'un acide.

10. Procédé selon la revendication 9, **caractérisé en ce que** l'acide est un acide inorganique choisi dans le groupe constitué de l'acide nitrique, l'acide sulfurique, l'acide chlorhydrique, l'acide perchlorique, l'acide hypochlorique, l'acide fluorhydrique, l'acide bromhydrique, l'acide phosphorique et des mélanges de ceux-ci.

11. Procédé selon la revendication 9, **caractérisé en ce que** l'acide est un acide organique choisi dans le groupe constitué de l'acide formique, l'acide acétique, l'acide propionique, l'acide citrique, l'acide tartrique, l'acide lactique et des mélanges de ceux-ci.

12. Procédé selon les revendications 9 à 11, **caractérisé en ce que** les poudres de métal de transition sont choisies dans le groupe constitué de Fe, Ti, V, Cr, Mn, Co, Ni, et des mélanges de ceux-ci.

13. Procédé selon les revendications 9 à 12, **caractérisé en ce que** les poudres de métal de transition sont des poudres de fer.

14. Procédé selon l'une quelconque des revendications 1 à 13, **caractérisé en ce que** le composé métallique est choisi dans le groupe comprenant le nitrate ferrique et le chlorure ferrique.

15. Procédé selon l'une quelconque des revendications 1 à 14, **caractérisé en ce que** le composé de lithium est choisi dans le groupe comprenant l'hydroxyde de lithium, le fluorure de lithium, le chlorure de lithium, l'oxyde de lithium, le nitrate de lithium, l'acétate de lithium, le phosphate de lithium, l'hydrogénophosphate de lithium, le dihydrogénophosphate de lithium, le phosphate de lithium-ammonium, le phosphate de lithium-diammonium, et des mélanges de ceux-ci.

16. Procédé selon la revendication 2 et l'une quelconque des revendications 3 à 15 dépendantes de la revendication 2, **caractérisé en ce que** le composé contenant un groupe phosphate est choisi dans le groupe comprenant l'hydrogénophosphate d'ammonium, le dihydrogénophosphate d'ammonium, le phosphate d'ammonium, le pentoxyde de phosphore, l'acide phosphorique, le phosphate de lithium, l'hydrogénophosphate de lithium, le dihydrogénophosphate de lithium, le phosphate de lithium-ammonium, le phosphate de lithium-diammonium, et des mélanges de ceux-ci.

17. Procédé selon l'une quelconque des revendications 1 à 16, **caractérisé** plus avant par l'ajout d'un saccharide dans le mélange de réactifs avant l'opération de réduction du mélange de réactifs.

18. Procédé selon la revendication 17, **caractérisé en ce que** le saccharide est choisi dans le groupe comprenant le saccharose, le glycan, et des polysaccharides.
